# EUROPEAN PATENT APPLICATION

(11) **EP 4 723 145 A1**
(43) Date of publication of application: **08.04.2026**
(21) Application number: 24203985.7
(22) Date of filing: 01.10.2024
(51) Int. Cl.: H01F 6/06, G21B 1/05

(54) **COIL WITH HELICAL WINDING PATH FOR GENERATING A MAGNETIC FIELD**

(71) Applicant: Proxima Fusion GmbH, 81369 München (DE)
(72) Inventor: SLADE, Robert, Aston, Bampton OX18 2BF (GB); KUBIE, Martin, 8006 Zürich (CH); SCHILLING, Jonathan, 85737 Ismaning (DE); HOECHTER, Henri, 80687 München (DE)
(74) Representative: Bardehle Pagenberg Partnerschaft mbB Patentanwälte Rechtsanwälte

(57) **Abstract**

The present disclosure relates to a non-planar, high-temperature superconducting coil, for generating a magnetic field for confining a plasma inside a plasma vessel, the coil comprising: a high-temperature superconducting cable, wherein the cable is wound in a plurality of turns along a centroid line of the coil and wherein the cable follows a helical winding path around the centroid line of the coil, wherein the helical winding path comprises a plurality of loops per turn of the plurality of turns.

## Description

### FIELD OF THE INVENTION

The present disclosure relates to the field of high-temperature superconducting (HTS) technology, specifically to the design and manufacturing of superconducting coils used for generating magnetic fields. More particularly, the invention pertains to non-planar HTS coils with helical winding configurations, which are utilized in magnetic confinement devices such as stellarators for plasma confinement in fusion energy research.

### BACKGROUND

In the field of plasma confinement for nuclear fusion, stellarators are a prominent type of device utilized to maintain the stability and confinement of high-temperature plasma. These devices employ complex magnetic fields generated by a series of non-planar magnetic coils to confine the fusion plasma in a toroidal plasma vessel, thereby facilitating the necessary conditions for nuclear fusion reactions.

The development of high-temperature superconducting (HTS) technology has been pivotal in advancing the design and efficiency of magnetic confinement devices, such as stellarators, used in fusion energy research. Traditional methods of winding non-planar coils, such as the pancake coil approach used in the Wendelstein 7-X (W7X) stellarator, have presented several challenges. These include the need for complex winding and assembly processes, as well as difficulties in aligning the superconducting tapes with the local magnetic field to maximize the critical current (IC).

Despite advances in the field of stellarator design and specifically coil windings, there remains a need for improvement. Further, attempts with HTS tapes have revealed that there are significant manufacturing difficulties and that there remain risks of damaging the tapes of the coil.

Against this background, an object of the present disclosure is to provide a high-temperature superconducting coil that can overcome the disadvantages of the prior art. Specifically, manufacturing complexity should be reduced, tape strain should be minimized, generation of magnetic field should be provided.

### SUMMARY

These and other objects, which become apparent from the following description, are addressed by the subject-matter of the independent claims. Preferred embodiments are subject of the dependent claims, and the skilled person finds hints for other suitable embodiments of the present disclosure throughout the disclosure of the present application.

A first aspect of the present disclosure relates to a non-planar, high-temperature superconducting coil, for generating a magnetic field for confining a plasma inside a plasma vessel, the coil comprising: a high-temperature superconducting cable, wherein the cable is wound in a plurality of turns along a centroid line of the coil and wherein the cable follows a helical winding path around the centroid line of the coil, wherein the helical winding path comprises a plurality of loops per turn of the plurality of turns.

The proposed coil allows to improve the efficiency, manufacturability, and performance of the superconducting coils by addressing the challenges associated with traditional winding methods.

The helical winding path has the advantage that it may facilitate better alignment of the tapes with the local magnetic field, optimizing the critical current. Thereby, a more uniform and stable magnetic field may be generated.

The helical winding path may also help in reducing magnetic field errors and improving the overall magnetic field quality, thereby enhancing the performance of the plasma confinement system.

As described elsewhere herein, in some embodiments, the cable comprises a high-temperature superconductor stack comprising a plurality of high-temperature superconducting tapes.

Field alignment of the turns may not be needed by way of this coil. Nevertheless, it is possible and could be easily performed, as the stack, specifically, the tapes thereof is close to the local B field orientation, which is attributable to the winding proposed in here.

The use of high-temperature superconducting tapes in the cable may provide higher critical current densities and better electromagnetic performance compared to conventional superconductors. This may result in a more efficient and powerful magnetic field generation.

The helical winding path with multiple loops per turn may provide enhanced mechanical stability by distributing mechanical loads more evenly across the coil structure. This may reduce localized stress and strain, preventing deformation and buckling of the HTS tapes and maintaining the structural integrity of the coil.

The specified winding path and non-planar design may simplify the manufacturing and assembly process by providing clear guidelines for winding the HTS cable. This may reduce the complexity of the winding procedure, minimize the need for intricate clamping and alignment fixtures, and ensure consistent quality across production runs.

The modular approach to winding the coil may also facilitate easier assembly, maintenance, and repair, improving the overall reliability and serviceability of the coil system.

Additionally, it is believed that the helical path may generate a toroidal or solenoidal internal magnetic field component, which interacts with the current in the coil to produce counteracting Lorentz forces, thereby reducing overall stress within the coil structure.

The high-temperature superconducting stack may comprise one or more high-temperature superconducting tapes. For instance, the high-temperature superconducting stack may comprise the following number of tapes: between 2 and 55, between 15 and 45, between 25 and 35, 30.

Further, for instance, the high-temperature superconducting stack may comprise the following number of tapes: between 125 and 175, between 135 and 165, between 145 and 155, 150.

Further, for instance, the high-temperature superconducting stack may comprise the following number of tapes: between 2 and 200, between 40 and 160 , between 80 and 120.

As described elsewhere herein, for example, the high temperature superconducting stack may be a rare earth barium copper oxide superconductor, ReBCO, stack.

A high-temperature superconductor stack may be a layered structure composed of multiple high-temperature superconducting materials, typically arranged in a series of tapes. These stacks may be designed to exploit the properties of HTS materials, which can conduct electricity with essentially zero resistance at relatively higher temperatures compared to conventional superconductors.

It is noted that in some embodiments of the present disclosure, the cable comprising a high-temperature superconducting stack may be optional.

A helical winding path may in some examples refer to a continuous and/or spiraling trajectory that wraps around a path, e.g., the centroid line as described in here, thereby forming a helix. The trajectory may be characterized by its pitch, as described elsewhere herein. The pitch may be the distance between successive loops along the centroid line. The trajectory may be characterized by its radius, which is the distance from the centroid line to the path. The helical winding path can be used in various applications, not specifically limited to stellarators.

According to a further embodiment, the helical winding path comprises at least 5, preferably at least 6, preferably at least 8, preferably at least 10, preferably at least 12, preferably at least 15, preferably at least 20, preferably at least 25 loops per turn of the plurality of turns; and/or helical winding path comprises at most 100, preferably at most 80, preferably at most 70, preferably at most 60, preferably at most 50 loops per turn of the plurality of turns.

The advantage of this embodiment may be multifaceted.

The specified range of loops per turn may minimize bending of the cable comprising the stack with tapes, thereby reducing the risk of damage to the cable, specifically to the tapes thereof and the superconducting layer. Further, this may allow to maintain a critical current needed for generating the magnetic field.

This configuration may also prevent cable buckling, specifically buckling of tapes, thereby ensuring the structural integrity of the coil. The number of loops per turn may allow for optimization of the coil design for various applications, balancing mechanical stability and electromagnetic performance. For this purpose, the number should not be too large and not too small. Thereby, it may provide a balance between mechanical stability, electromagnetic performance, manufacturing simplicity, and design flexibility, making it a robust solution for constructing non-planar HTS coils for stellarators.

As described elsewhere herein in greater detail, certain helical winding variants may enable the entire coil to be wound without internal joints, significantly enhancing reliability and simplifying the manufacturing process while reducing cryogenic cooling power requirements.

According to a further embodiment, the cable forms at least one winding layer around the centroid line of the coil. Optionally, the at least one winding layer comprises a plurality of cable portions of the cable, the plurality of cable portions preferably being arranged circumferentially around the centroid line of the coil.

This configuration may provide enhanced mechanical stability by ensuring that the cable portions are evenly distributed around the centroid line, which may reduce localized stress and strain on the coil structure.

The arrangement may also facilitate better alignment of the cable portions with the magnetic field, potentially optimizing the electromagnetic performance of the coil. Additionally, the circumferential arrangement of the cable portions may allow for more efficient cooling and structural support, as the even distribution may provide more uniform thermal and mechanical properties throughout the coil.

This arrangement may also simplify the manufacturing process by allowing for a more straightforward winding procedure, reducing the need for complex clamping and alignment fixtures. Overall, the specified arrangement of the cable portions around the centroid line of the coil may enhance the performance, reliability, and manufacturability of the coil.

According to a further embodiment, the cable forms at least two winding layers around the centroid line of the coil, comprising a first and a second winding layer, each comprising a plurality of cable portions of the cable. Optionally, the cable portions of the first winding layer are wound in a first direction around the main trajectory, wherein the cable portions of the second winding layer are wound in a second direction around the main trajectory. Optionally, the first direction is the same as the second direction or the first direction is different from the second direction.

This embodiment may provide enhanced mechanical stability by distributing the cable portions evenly around the centroid line, thereby reducing localized stress and strain on the coil structure.

The arrangement of multiple winding layers may further enhance this stability by providing additional support and reducing the likelihood of deformation under operational loads. The circumferential arrangement of the cable portions may facilitate better alignment with the magnetic field, potentially optimizing the electromagnetic performance of the coil.

The use of at least two winding layers, with the option to wind the cable portions in the same or different directions, may offer additional flexibility in managing the mechanical and electromagnetic properties of the coil. Winding the layers in the same direction may provide a more uniform magnetic field, while winding in different directions may help counteract and balance the forces within the coil, reducing overall stress.

Furthermore, this design may simplify the manufacturing process by allowing for a more straightforward and controlled winding procedure. Potentially, this may reduce the need for complex clamping and alignment fixtures. The even distribution of cable portions may also enhance cooling efficiency and provide more uniform thermal properties throughout the coil.

By having the first direction different from the second direction (e.g., clockwise and anti-clockwise), this embodiment may have the advantage that a central toroidal field component for the magnetic field may be adjusted, since opposite helical winding directions may produce toroidal field in opposite directions.

According to a further embodiment, one or more of the one or more winding layers comprise at least 2, preferably at least 4, preferably at least 6, preferably at least 8, preferably at least 10, preferably at least 12, preferably at least 14 cable portions; and/or one or more of the one or more winding layers comprise at most 60, preferably at most 55, preferably at most 50, preferably at most 35, preferably at most 40 cable portions.

This embodiment may have the advantage that stability may be improved by ensuring an optimal number of cable portions within each winding layer. Having at least the specified minimum number of cable portions may distribute mechanical loads more evenly, reducing localized stress and strain on the coil structure. This even distribution may also help prevent deformation and buckling of the cable portions, thereby maintaining the structural integrity of the coil.

The specified range of cable portions may also facilitate better alignment with the magnetic field, potentially optimizing the electromagnetic performance of the coil. By having a sufficient number of cable portions, the winding layers may create a more uniform magnetic field, which may enhance the coil's overall efficiency and effectiveness.

Additionally, the specified range may simplify the manufacturing process by providing clear guidelines for the number of cable portions to be used in each winding layer. This may reduce the complexity of the winding procedure and minimize the need for intricate clamping and alignment fixtures. The even distribution of cable portions may also enhance cooling efficiency and provide more uniform thermal properties throughout the coil.

From an electromagnetic perspective, the specified range may facilitate better alignment of the cable portions with the magnetic field, optimizing the coil's performance. A sufficient number of cable portions may create a more uniform magnetic field, enhancing the coil's overall efficiency and effectiveness. However, exceeding the upper limit may result in diminished returns, where the complexity of the magnetic interactions could lead to inefficiencies and reduced performance.

In terms of manufacturing, specifying the values within this range may simplify the winding process by providing clear guidelines for the number of cable portions to be used in each layer. This may reduce the complexity of the winding procedure, minimize the need for intricate clamping and alignment fixtures, and ensure consistent quality across production runs. Additionally, the even distribution of cable portions may enhance cooling efficiency and provide more uniform thermal properties throughout the coil.

It is noted that the cable portions may be understood as the number of turns. For instance, the coil may comprise only one cable forming said coil and when looking at a cross-section of the coil perpendicular to the centroid line, several cable portions may be recognized, each of which may correspond to one turn.

According to a further embodiment, neighboring cable portions of one or more of the one or more winding layers belong to consecutive turns of the plurality of turns along the centroid line of the coil.

The advantage of specifying that neighboring cable portions of one or more of the one or more winding layers belong to consecutive turns of the plurality of turns along the centroid line of the coil may be multifaceted.

For example, this configuration may provide enhanced mechanical stability by ensuring that the cable portions are evenly distributed and sequentially arranged along the centroid line of the coil. By having neighboring cable portions belong to consecutive turns, the mechanical load may be more evenly distributed, reducing localized stress and strain on the coil structure. This even distribution may help prevent deformation and buckling of the cable portions, thereby maintaining the structural integrity of the coil.

From an electromagnetic perspective, this arrangement may facilitate better alignment of the cable portions with the magnetic field, optimizing the coil's performance. The sequential arrangement of cable portions along consecutive turns may create a more uniform magnetic field, enhancing the coil's overall efficiency and effectiveness. This configuration may also reduce electromagnetic interference between adjacent cable portions, thereby improving the coil's performance.

In terms of manufacturing, specifying that neighboring cable portions belong to consecutive turns may simplify the winding process by providing a clear and systematic approach to arranging the cable portions. This may reduce the complexity of the winding procedure, minimize the need for intricate clamping and alignment fixtures, and ensure consistent quality across production runs. Additionally, the even distribution of cable portions may enhance cooling efficiency and provide more uniform thermal properties throughout the coil.

According to a further embodiment, a winding layer at a radially outer side with respect to the centroid line comprises a greater number of cable portions compared to a winding layer at a radially inner side with respect to the outer side.

The advantage of specifying that a winding layer at a radially outer side with respect to the centroid line comprises a greater number of cable portions compared to a winding layer at a radially inner side with respect to the outer side may be that enhanced mechanical stability is provided.

By having more cable portions in the outer winding layers, the coil may better withstand the centrifugal forces that are typically greater at the outer radius. This distribution may reduce localized stress and strain on the coil structure, thereby preventing deformation and buckling of the cable portions and maintaining the structural integrity of the coil.

From an electromagnetic perspective, this arrangement may optimize the magnetic field distribution within the coil. The increased number of cable portions in the outer winding layers may help create a more uniform magnetic field, enhancing the coil's overall efficiency and effectiveness. This configuration may also reduce electromagnetic interference between adjacent cable portions, thereby improving the coil's performance.

In terms of thermal management, having more cable portions in the outer winding layers may enhance cooling efficiency. The outer layers are typically more accessible to cooling mechanisms, and the increased number of cable portions may allow for better heat dissipation, ensuring more uniform thermal properties throughout the coil.

Additionally, this arrangement may simplify the manufacturing process by providing a clear and systematic approach to arranging the cable portions. The specified distribution may reduce the complexity of the winding procedure, minimize the need for intricate clamping and alignment fixtures, and ensure consistent quality across production runs.

According to a further embodiment, one or more of the plurality of cable portions of the cable of the first winding layer have the same number or a different number of loops per turn of the plurality of turns compared to one or more of the plurality of cable portions of the cable of the second winding layer.

By varying the number of loops per turn between the first and second winding layers, the design may accommodate different mechanical loads and stresses, thereby reducing localized strain and preventing deformation or buckling of the cable portions. This flexibility may help maintain the structural integrity of the coil under various operational conditions.

Electromagnetically, this arrangement may optimize the magnetic field distribution within the coil. Having the ability to vary the number of loops per turn between winding layers may allow for fine-tuning of the magnetic field characteristics, enhancing the coil's overall efficiency and effectiveness. This configuration may also reduce electromagnetic interference between adjacent cable portions, improving the coil's performance.

Additionally, this design may simplify the manufacturing process by providing greater flexibility in the winding procedure.

Overall, specifying that one or more of the plurality of cable portions of the first winding layer may have the same or a different number of loops per turn compared to the second winding layer may balance mechanical flexibility, electromagnetic performance, and manufacturing adaptability, resulting in a robust and high-performing coil design.

According to a further embodiment, the plurality of cable portions of the cable of the first winding layer is separated from and connected to the plurality of cable portions of the cable of the second winding layer via one or more joints.

By separating and connecting the winding layers via joints, the design may allow for easier assembly and disassembly of the coil. This modular approach may facilitate manufacturing, as individual winding layers can be more easily assembled and/or wound without disturbances or necessitating much effort. Additionally, the joints may help accommodate thermal expansion and contraction, reducing mechanical stress and preventing deformation or damage to the cable portions.

The separation of winding layers may help reduce electromagnetic interference between adjacent cable portions, improving the coil's performance. The joints may also provide a means to fine-tune the electrical connections between layers, optimizing the overall efficiency and effectiveness of the coil.

The joints may enhance cooling efficiency by providing additional pathways for heat dissipation. The separation of winding layers may allow for more effective cooling of individual layers, ensuring more uniform thermal properties throughout the coil. This may be particularly beneficial in high-power applications where efficient heat management is critical.

Additionally, this design may simplify the manufacturing process by providing greater flexibility in the winding procedure. The use of joints may reduce the complexity of the winding process, allowing for more straightforward assembly and alignment of the cable portions. This modular approach may also ensure consistent quality across production runs and/or assembly.

It is to note that joints are not necessarily needed. As described elsewhere herein, it may alternatively be possible to employ a suitable cable with which it is possible to wind the coil with continuous cable.

In some examples, structural parts that hold the turns of the cable in place may be added after one or more, preferably each of the winding layers has been wound. This structural part may be added at a radially outer side with respect to the one or more, preferably each of the winding layers.

According to a further embodiment, a first cable portion of the plurality of cable portions of the cable of the first winding layer and a second cable portion of the plurality of cable portions of the cable of the second winding layer are arranged in radial alignment.

Radial alignment may mean that an inner cable portion (i.e., of the first winding layer) and a respective outer cable portion (i.e., of the second winding layer) may lie on essentially a straight line that runs through the centroid line of the coil. As understood by the skilled person, manufacturing and/or assembly tolerances may need to be taken into consideration.

This configuration may provide enhanced mechanical stability by ensuring that the cable portions are evenly distributed and aligned radially. Radial alignment of the cable portions may help distribute mechanical loads more evenly across the coil structure, reducing localized stress and strain. This even distribution may prevent deformation and buckling of the cable portions, thereby maintaining the structural integrity of the coil.

Electromagnetically, this arrangement may optimize the magnetic field distribution within the coil. Radial alignment of the cable portions may create a more uniform magnetic field, enhancing the coil's overall efficiency and effectiveness. This configuration may also reduce electromagnetic interference between adjacent cable portions, thereby improving the coil's performance.

In terms of thermal management, radial alignment may enhance cooling efficiency. The alignment may allow for more effective heat dissipation, ensuring more uniform thermal properties throughout the coil. This may be particularly beneficial in high-power applications where efficient heat management is critical.

Additionally, this design may simplify the manufacturing process by providing a clear and systematic approach to arranging the cable portions. Radial alignment may reduce the complexity of the winding procedure, minimize the need for intricate clamping and alignment fixtures, and ensure consistent quality across production runs.

According to a further embodiment, neighboring cable portions of a winding layer at a radially outer side with respect to the centroid line of the coil are spaced apart from one another by a greater amount compared to neighboring cable portions of a winding layer at a radially inner side with respect to the radially outer side.

This configuration may provide more space for placement of the coil, specifically of the coil portions next to one another in the outer winding layers. By spacing the cable portions further apart in the outer winding layers, the design may reduce the risk of mechanical stress and strain that may increase with the radius. This spacing may help prevent deformation and buckling of the cable portions, thereby maintaining the structural integrity of the coil.

Electromagnetically, this arrangement may optimize the magnetic field distribution within the coil. The increased spacing in the outer winding layers may help create a more uniform magnetic field, enhancing the coil's overall efficiency and effectiveness. This configuration may also reduce electromagnetic interference between adjacent cable portions, thereby improving the coil's performance.

Additionally, this design may simplify the manufacturing process by providing a clear and systematic approach to arranging the cable portions. The specified spacing may reduce the complexity of the winding procedure.

According to a further embodiment, the cable has a cross-section seen in a cross-section (A-A) of the coil essentially perpendicular to the centroid line of the coil of at least 10 mm², preferably at least 40 mm², preferably at least 60 mm², preferably at least 80 mm², preferably at least 100 mm²; and/or of at most 500 mm², preferably at most 460 mm², preferably at most 440 mm², preferably at most 420 mm², preferably at most 400 mm², preferably at most 100 mm².

According to a further embodiment, the cable constitutes one continuous cable for forming the coil.

This configuration may provide enhanced reliability and electrical performance. Using a single continuous cable may reduce the risk of electrical resistance and potential failure points that can occur at joints. This may result in a more efficient and reliable coil with improved electrical conductivity and reduced power losses.

Specifying that the cable constitutes one continuous cable for forming the coil may balance reliability, electrical performance, mechanical integrity, and manufacturing simplicity, resulting in a robust and high-performing coil design.

According to a further embodiment, the high-temperature superconducting tapes are preferably ReBCO tapes.

Specifying ReBCO tapes as the preferred HTS material may provide several advantages due to their superior properties. ReBCO tapes may offer higher critical current densities, better mechanical strength, and greater tolerance to magnetic fields compared to other HTS materials. This may result in a more efficient and robust coil with enhanced performance characteristics.

According to a further embodiment, wherein the cable comprises a helical pitch defining the length of one loop along the centroid line of the coil, wherein the helical pitch is at least 0.2, preferably at least 0.4, preferably at least 0.6, preferably at least 0.8, preferably at least 1.0, preferably at least 1.2, preferably at least 1.4; and/or the pitch is at most 2.5, preferably at most 2.4, preferably at most 2.3, preferably at most 2.2, preferably at most 2.1, preferably at most 2.0, preferably at most 1.9, preferably at most 1.8.

The specified range for the helical pitch may optimize the mechanical and electromagnetic properties of the coil. The specified pitch range may ensure that the helical windings of the coil are wound with an optimal spacing, reducing mechanical stress and strain on the tapes. This may prevent deformation and buckling, thereby maintaining the structural integrity of the coil.

The defined pitch range may simplify the winding process by providing clear guidelines for the spacing of the helical windings. This may reduce the complexity of the winding procedure, minimize the need for intricate clamping and alignment fixtures, and ensure consistent quality across production runs.

According to a further embodiment, the coil may further comprise a core for winding the coil, the core preferably comprising: a core winding path for accommodating the high-temperature superconducting cable, the core winding path being formed helically around a centroid line of the core, wherein the core winding path preferably comprises a plurality of loops.

The core may provide a stable and robust structure for winding the HTS cable, reducing mechanical stress and strain on the cable. This stability may help prevent deformation and buckling of the cable portions, thereby maintaining the structural integrity of the coil.

The helical winding path with a plurality of loops may ensure that the cable is evenly distributed and securely held in place, further enhancing mechanical stability. The core winding path being formed helically around the centroid line may facilitate better alignment of the HTS cable with the magnetic field. This alignment may optimize the critical current of the HTS tapes, enhancing the overall electromagnetic performance and efficiency of the coil.

The presence of a core with a defined winding path may simplify the manufacturing process by providing a clear and systematic approach to winding the HTS cable. This may reduce the complexity of the winding procedure, minimize the need for intricate clamping and alignment fixtures, and ensure consistent quality across production runs.

The core may also facilitate automated winding processes, further enhancing manufacturing efficiency and consistency.

According to a further embodiment, the core comprises a metal, preferably iron, copper or aluminum, and/or the core comprises an alloy, preferably steel.

Another aspect is directed to a core for winding a non-planar, high-temperature superconducting coil, the coil being for generating a magnetic field for confining a plasma inside a plasma vessel, the coil preferably being the coil as described in the present disclosure, the core comprising: a core winding path for accommodating a high-temperature superconducting cable, the core winding path being formed helically around a centroid line of the core, wherein the core winding path comprises a plurality of loops

Respective advantages and features of the core are set out above in relation to the coil and apply to the core as well, as understood by the skilled person.

Another aspect is directed to a method for assembling a non-planar, high-temperature superconducting coil, the coil being for generating a magnetic field for confining a plasma inside a plasma vessel, the coil preferably being the coil as described in the present disclosure, the method comprising: winding a high-temperature superconducting cable in a plurality of turns along a centroid line of the coil; helically winding the cable one or more times around the centroid line of the coil during the step of winding the cable in a plurality of turns.

Respective advantages and features of the method are set out above in relation to the coil and the core and apply to the method as well, as understood by the skilled person.

Another aspect is directed to a stellarator, for generating a magnetic field for confining a plasma inside a plasma vessel of the stellarator, wherein the stellarator comprises the coil as described in here.

### BRIEF DESCRIPTION OF THE FIGURES

Reference is made to the following figures:
Fig. 1 shows a coil according to a possible embodiment of the present disclosure.
Fig. 2 shows one turn of a cable of a coil according to a possible embodiment of the present disclosure.
Fig. 3 shows a cross-section of a coil according to a possible embodiment of the present disclosure in a perspective view.
Fig. 4 shows a cross-section of a coil according to a possible embodiment of the present disclosure in a perspective view.
Fig. 5 shows a cross-section of a coil according to a possible embodiment of the present disclosure in a perspective view.
Fig. 6 shows a cross-section of a coil according to a possible embodiment of the present disclosure.
Fig. 7 shows a cross-section of a coil according to a possible embodiment of the present disclosure.
Fig. 8 shows a stack according to a possible embodiment of the present disclosure.

### DETAILED DESCRIPTION

The term "and/or" is only an association relationship describing associated objects and represents that three relationships may exist. For example, A and/or B may represent three conditions: i.e., independent existence of A, existence of both A and B and independent existence of B. In addition, the character "/" in the disclosure usually represents that previous and next associated objects form an "or" relationship.

When dimensions are described herein, manufacturing tolerances usually have to be taken into consideration, which is expressed by the term "substantially". Thus, the dimensions described by such a term may vary slightly. Also in general, i.e., not necessarily limited to dimensions, it is submitted that unless otherwise stated, the term "substantial" or "substantially" as used in the present context may be understood to a great or significant extent or for the most part or essentially.

A phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

In the following, a detailed description with reference to the figures is provided.

While specific feature combinations are described in the following with respect to exemplary embodiments of the present disclosure, it is to be understood that not all features of the described aspects have to be present for realizing the technical advantages provided by the present disclosure, which is defined by the subject matter of the claims. The disclosed aspects may be modified by combining certain features of one aspect with one or more features of another aspect. Specifically, the skilled person will understand that features, components and/or functional elements of one aspect can be combined with technically compatible features, components and/or functional elements of any other aspect of the present disclosure given that the resulting combination falls within the definition of the present disclosure. The skilled person also understands that certain features may be omitted in so far as they appear dispensable.

Throughout the present figures and specification, the same reference numerals refer to the same elements. The figures may not be to scale, and the relative size, proportions, and depiction of elements in the figures may be exaggerated for clarity, illustration, and convenience.

For the sake of clarity and conciseness, certain aspects of components or steps of certain embodiments are presented without undue detail where such detail would be apparent to those skilled in the art in light of the teachings herein and/or where such detail would obfuscate an understanding of more pertinent aspects of the embodiments.

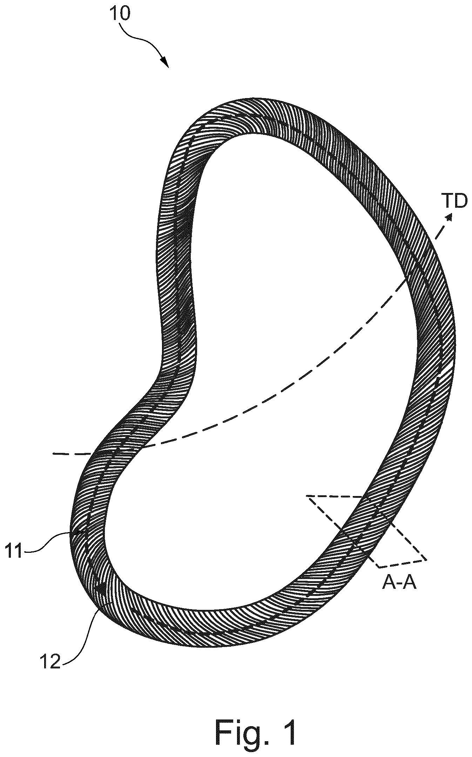

**Fig. 1** shows a coil according to a possible embodiment of the present disclosure.

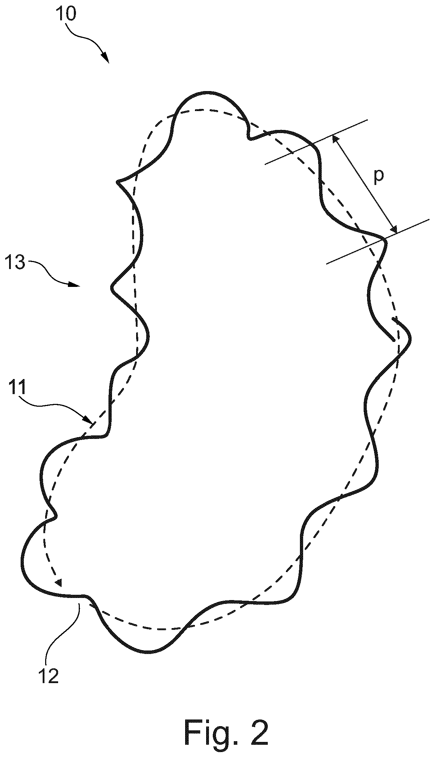

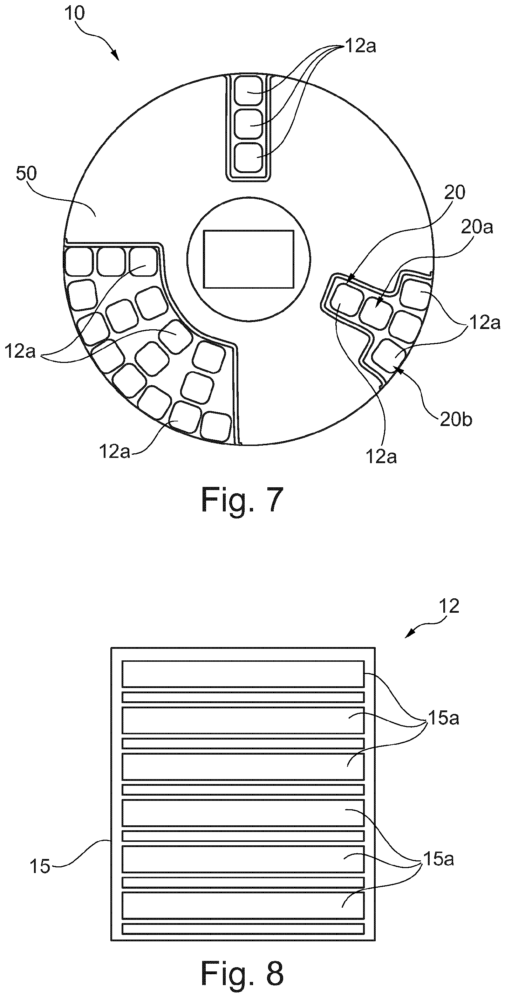

The exemplary coil 10 may be non-planar, high-temperature superconducting coil 10. It may be for generating a magnetic field for confining a plasma inside a plasma vessel (not shown, but the toroidal direction is indicated as TD). The coil may comprise a high-temperature superconducting cable 12, preferably comprising a high-temperature superconductor stack 15 comprising a plurality of high-temperature superconducting tapes 15a **(****Fig. 8****),** wherein the cable 12 is wound in a plurality of turns **(****Fig. 2** shows one turn) along a centroid line 11 of the coil 10 and wherein the cable 12 follows a helical winding path (not provided with a reference numeral in Fig. 1, but indicated in **Fig. 2**) around the centroid line 11 of the coil 10. The helical winding path 13 comprises a plurality of loops per turn of the plurality of turns (as best seen in Fig. 2).

The primary component shown in Fig. 1 may be the coil 10, which is responsible for generating the magnetic field, which may be used for a stellarator's operation.

The centroid line 11 may represent the central axis of the coil 10, around which the cable is symmetrically wound.

**Fig. 2** shows one turn of a cable 12 of a coil 10 according to a possible embodiment of the present disclosure.

As can be seen in Fig. 2, the coil 10 is formed by winding the cable 12 in a specific pattern. The cable 12 is a conductive material that allows for the flow of electric current.

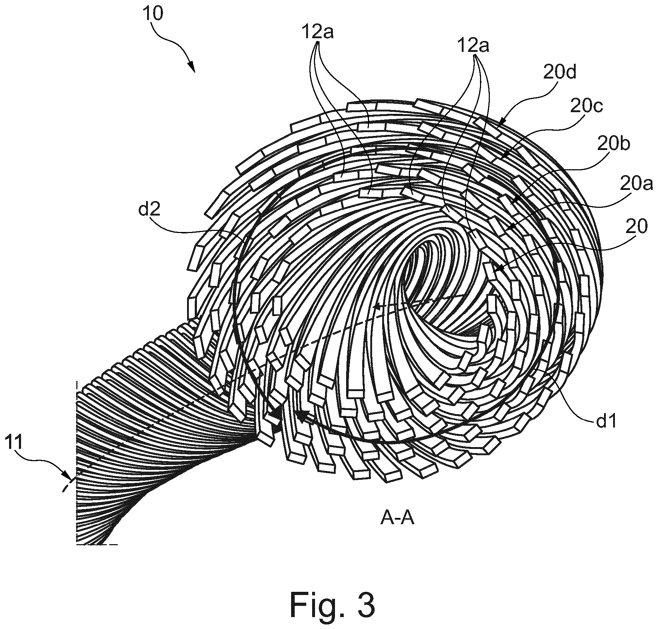

The cable 12 may be divided into multiple cable portions 12a, each may contribute to a same or different winding layer 20 (as best seen in, e.g., **Fig. 3**).

The portions 12a may also belong to the same cable 12.

As can be seen in Fig. 2, the helical winding path 13 may comprise at least 5, preferably at least 6, preferably at least 8, preferably at least 10, preferably at least 12, preferably at least 15, preferably at least 20, preferably at least 25 loops per turn of the plurality of turns.

Additionally or alternatively, as can also be seen in Fig. 2, the helical winding path 13 may comprise at most 100, preferably at most 80, preferably at most 70, preferably at most 60, preferably at most 50 loops per turn of the plurality of turns.

The specific number of loops per turn may depend on plural factors such that the examples described in here are not limited to any specific examples.

The pitch p of the cable is indicated in Fig. 2. As described elsewhere herein, the pitch p may vary between layers but could alternatively be the same. Further, the centroid line 11 is shown for reference.

The pitch p may be the distance between successive loops along the centroid line. As can be seen in Fig. 2, the pitch p starts at one point along the centroid line 11 where the cable 12 is located to the right-hand side of the centroid line 11. Further, the pitch p ends again at one point where the cable 12 is located to the right-hand side of the centroid line 11. This may represent the pitch p. Thereby, the helical pitch defines the length of one loop along the centroid line 11 of the coil 10.

The helical pitch may be at least 0.2, preferably at least 0.4, preferably at least 0.6, preferably at least 0.8, preferably at least 1.0, preferably at least 1.2, preferably at least 1.4; and/or the pitch may be at most 2.5, preferably at most 2.4, preferably at most 2.3, preferably at most 2.2, preferably at most 2.1, preferably at most 2.0, preferably at most 1.9, preferably at most 1.8.

The specified range for the helical pitch may optimize the mechanical and electromagnetic properties of the coil. The specified pitch range may ensure that the helical windings of the coil are wound with an optimal spacing, reducing mechanical stress and strain on the tapes. This may prevent deformation and buckling, thereby maintaining the structural integrity of the coil.

The defined pitch may simplify the winding process by providing clear guidelines for the spacing of the helical windings. This may reduce the complexity of the winding procedure, minimize the need for intricate clamping and alignment fixtures, and ensure consistent quality across production runs.

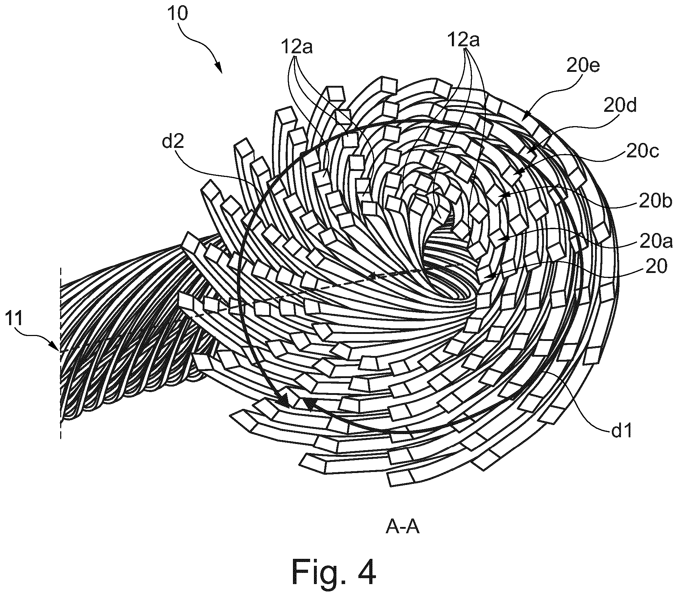

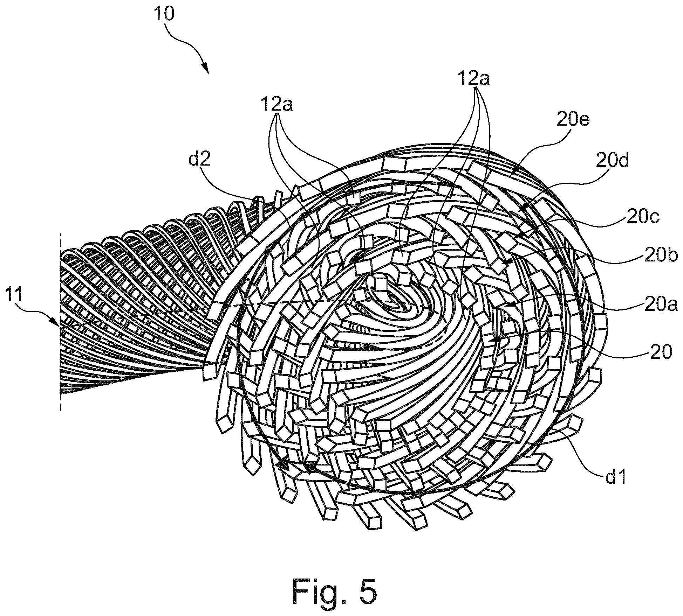

**Fig. 3** shows a cross-section of a coil 10 according to a possible embodiment of the present disclosure in a perspective view. **Fig. 4** shows a cross-section of a coil 10 according to another possible embodiment of the present disclosure in a perspective view. **Fig. 5** shows a cross-section of a coil 10 according to yet another possible embodiment of the present disclosure in a perspective view.

Each of Figs. 3 to 5 may show the cross-section A-A as indicated exemplarily in Fig. 1

The coil 10 may comprise multiple winding layers 20a, 20b, 20c, 20d. Each winding layer 20 might be composed of cable portions 12a arranged in a helical winding path 13. The first direction d1 and second direction d2 of the winding could represent the orientation of the cable 12 in different layers. This may provide enhanced mechanical stability by distributing the cable portions 12a evenly around the centroid line 11, thereby reducing localized stress and strain on the coil 10.

The arrangement of multiple winding layers 20a, 20b, 20c, 20d may enhance this stability by providing additional support and reducing the likelihood of deformation under operational loads. The circumferential arrangement of the cable portions 12a may facilitate better alignment with the magnetic field, potentially optimizing the electromagnetic performance of the coil.

Generally speaking, as can be seen from Figs. 3 to 5, the cable 12 may form at least one winding layer 20a, 20b, 20c, 20d, 20e around the centroid line 11 of the coil 10. Optionally, the at least one winding layer 20a, 20b, 20c, 20d, 20e comprises a plurality of cable portions 12a of the cable 12.

As can be seen from Figs. 3 to 5, the plurality of cable portions 12a can be arranged circumferentially around the centroid line 11 of the coil 10.

As can be seen from Figs. 3 to 5, the cable 12 forms at least two winding layers 20a, 20b, 20c, 20d, 20e around the centroid line 11 of the coil 10, comprising a first (e.g., 20a) and a second (e.g., 20b) winding layer, each comprising a plurality of cable portions 12a of the cable 12. Optionally, the cable portions of the first winding layer 20a are wound in a first direction d1 around the main trajectory, i.e., the centroid line 11, wherein the cable portions 12 of the second winding layer 20b are wound in a second direction around the main trajectory, i.e., the centroid line 11. Optionally, the first direction d1 is the same as the second direction d2 or the first direction is different from the second direction.

Fig. 4 might provide an expanded view of the coil 10 with an additional winding layer 20e. The cable 12 could be shown in various cable portions 12a forming the winding layers 20a, 20b, 20c, 20d, 20e. The centroid line 11 and the cross-section AA might also be depicted, illustrating the arrangement of the winding layers. This detailed view could be useful in understanding the structural integrity of the coil 10 in a stellarator.

It may additionally or alternatively be possible that the winding of the coil 10 follows a specific pattern, i.e., in a first direction d1. Then, subsequently, the winding direction is changed and the cable 12 follows the second winding direction d2. The winding may continue or start in the second direction d2, which is typically perpendicular or at an angle to the first direction d1.

In Fig. 3 and Fig. 4, the cable portions 12a of all winding layers are wound in essentially the same direction.

Fig. 5 also illustrates an exemplary cross-section A-A. As with Fig. 3 and Fig. 4, the first direction d1 and the second direction d2 are indicated. Further, Fig. 5 shows winding layers 20, 20a, 20b, 20c, 20d, 20e. Compared to Fig. 3 and Fig. 4, the winding layers have alternatingly different winding directions d1 and d2. For instance, the cable portions 12a of the first layer 20 are wound in direction d1, while the cable portions 12a of the second winding layer 20b are wound in direction d2.

The cross-sections of the cable 12 in Fig. 4 and 5 is rectangular. The cross-sections may have almost the shape of a square.

Further, in Figs. 3 to 5, the centroid line 11 is indicated by way of example.

Although Figs. 3 to 5 show specific numbers of cable portions 12a for each winding layer 20, 20a, 20b, 20c, 20d, 20e, generally, one or more of the one or more winding layers 20, 20a, 20b, 20c, 20d, 20e comprise at least 2, preferably at least 4, preferably at least 6, preferably at least 8, preferably at least 10, preferably at least 12, preferably at least 14 cable portions; and/or one or more of the one or more winding layers 20, 20a, 20b, 20c, 20d, 20e comprise at most 60, preferably at most 55, preferably at most 50, preferably at most 35, preferably at most 40 cable portions 12a.

It is noted that neighboring cable portions 12a of one or more of the one or more winding layers 20, 20a, 20b, 20c, 20d, 20e belong to consecutive turns of the plurality of turns along the centroid line 11 of the coil 12. Taking for instance a cable portion 12a of the winding layer 20 in Fig. 5, this cable portion 12a may make one turn along the centroid line 11. The end of this turn may be again at the cross-section A-A depicted in Fig. 5 and right next to the start of the cable portion 12a.

This may provide enhanced mechanical stability by ensuring that the cable portions 12a are evenly distributed and sequentially arranged along the centroid line 11 of the coil 10. By having neighboring cable portions 12a belong to consecutive turns, the mechanical load may be more evenly distributed, reducing localized stress and strain on the coil 10.

As can be further gathered from Figs. 3 to 5, a winding layer at a radially outer side with respect to the centroid line 11 comprises a greater number of cable portions 12a compared to a winding layer at a radially inner side with respect to the outer side. For instance, in Fig. 5, winding layer 20 may have less cable portions 12a compared to winding layer 20e. However, the present disclosure is not limited to this example.

Further, it is also possible that one or more of the plurality of cable portions 12a of the cable 12 of a first winding layer have the same number or a different number of loops per turn of the plurality of turns compared to one or more of the plurality of cable portions 12a of the cable 12 of a second winding layer.

In an example (not shown in the figures), the plurality of cable portions 12a of the cable 12 of a first winding layer is separated from and connected to the plurality of cable portions 12a of the cable 12 of a second winding layer via one or more joints. Hence, the cable portions 12a may belong to separate cables. However, it is preferred that the cable portions 12a belong to the same cable 12.

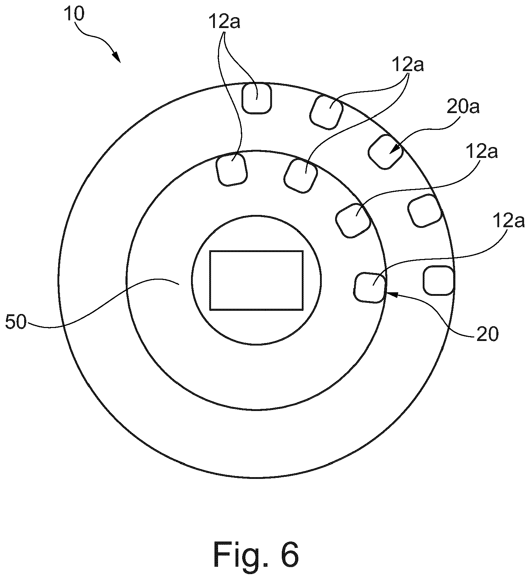

**Fig. 6** shows a cross-section of a coil according to a possible embodiment of the present disclosure. It also depicts a core 50, which may be present also in the final assembly of the coil 10. It is noted that the core 50 may not be shown in Figs. 1 to 5 to provide a better overview of the coils 10 and their winding.

The core 50 may provide the backbone of the coil structure. It can comprise iron, copper or aluminum, and can thereby have different benefits.

In Fig. 6, the individual winding layers (which may also be termed shells) can have different numbers of turns, a different number of loops per turn, and can helix in either direction (as previously indicated by way of d1 and d2).

Each winding layer 20 may have its own coil core 50 (collectively indicated by way of 50 in Fig. 6. In this manner, the coil structure is built from a series of nested shells.

The inner layer (20 in Fig. 6) is wound into a helical groove on the shell around the core 50. Subsequent layers (20a in Fig. 6) are wound into shells of a core structure that is assembled over the previous layer after winding.

It may be possible that each layer is wound from a separate piece of cable, with joints between the winding layers. Thereby, the cable portions 12a shown in Fig. 6 may belong to separate cables.

**Fig. 7** shows a cross-section of a coil according to a possible embodiment of the present disclosure.

Exemplary, a first cable portion 12a of the plurality of cable portions 12a of the cable of a first winding layer and a second cable portion 12a of the plurality of cable portions of the cable of the second winding layer are arranged in radial alignment. This may be seen in particular by way of the three cable portions 12a shown at the very top of Fig. 7, which are depicted to be in radial alignment.

Fig. 7 may be referred to as helical canyon winding. Thereby, each layer may have the same number of turns and loops. Further, all winding layers may be wound in the same direction. The turns are all wound into recesses (e.g., groves or canyons) that are several turns deep. The helical canyon winding coil structure can be made from a single continuous piece of material. This may be 3D printed. It may alternatively be assembled from elements attached in an azimuthal direction. Thereby, the shells applied in the example of Fig. 6 may not be needed. For example, the structure could be made from a large number of stamped laminations that are twisted into a helix and glued together. In one example, this could be established by using vacuum impregnation.

As best seen in the lower left part of Fig. 7, neighboring cable portions 12a of a winding layer at a radially outer side with respect to the centroid line 11 of the coil 10 can be spaced apart from one another by a greater amount compared to neighboring cable portions 12a of a winding layer at a radially inner side with respect to the radially outer side. This may allow to have further cable portions 12a in a layer that is radially further outside.

As best seen in the lower left part of Fig. 7, it is possible to widen the canyon with radius to include more turns side by side. Thereby, some turns may not be in contact with the core 50 in between. In order to improve quench protection, a layer providing at least partial insulation may be placed on the turns instead of the core structure. Further, additional conductive elements may be provided to connect those turns to the structure (not shown in the figures).

Typically, all winding layers of the embodiment of Fig. 7 may have the same number of loops per turn, which may be set by the requirement to stay within the grooves (of canyons), which aims at avoiding buckling.

As described elsewhere herein, in one aspect, there is just provide the **core** 50 for winding a non-planar, high-temperature superconducting coil 10, the coil 10 being for generating a magnetic field for confining a plasma inside a plasma vessel, the coil preferably being the coil as described in the present disclosure, the core 50 comprising: a core winding path for accommodating a high-temperature superconducting cable, the core winding path being formed helically around a centroid line of the core, wherein the core winding path comprises a plurality of loops. A cross-section of the core winding path may be shown in, e.g., Fig. 6 and Fig. 7.

**Fig. 8** shows a stack 15 according to a possible embodiment of the present disclosure.

The high-temperature superconducting stack 15 may comprise one or more high-temperature superconducting tapes 15a. Fig. 8 only shows 6 tapes 15a for illustrative purposes. It is not intended to limit the scope of protection and is merely meant to be an example.

For instance, the high-temperature superconducting stack 15 may comprise the following number of tapes 15a: between 2 and 55, between 15 and 45, between 25 and 35, 30.

Further, for instance, the high-temperature superconducting stack 15 may comprise the following number of tapes 15a: between 125 and 175, between 135 and 165, between 145 and 155, 150.

Further, for instance, the high-temperature superconducting stack 15 may comprise the following number of tapes 15a: between 2 and 200, between 40 and 160, between 80 and 120.

As an example, the high temperature superconducting stack 15 may be a rare earth barium copper oxide superconductor, ReBCO, stack 15.

The high-temperature superconductor stack 15 can be a layered structure composed of multiple high-temperature superconducting materials, typically arranged in a series of tapes 15a as illustrated in Fig. 8. These stacks may be designed to exploit the properties of HTS materials, which can conduct electricity with essentially zero resistance at relatively higher temperatures compared to conventional superconductors.

As described elsewhere herein, in some embodiments of the present disclosure, it may be optional that the cable 12 comprises a high-temperature superconducting stack 15. For instance, the cable 12 may comprise a low-temperature superconducting stack.

It is noted that Fig. 8 shows a stack 15 according to a possible embodiment of the present disclosure at any positions along the length of the cable, specifically along the centroid line of the coil. The cross-section may be any cross-section, not particularly limited to a specific position.

The cable 12 may be part of a stellarator, comprising a non-planar magnetic field coil. The cable 12 comprises a stack 15, comprising a plurality of high-temperature superconducting tapes 15a.

In any of the above embodiments, the cable can have a cross-section seen in a cross-section (A-A) of the coil essentially perpendicular to the centroid line of the coil of at least 10 mm², preferably at least 40 mm², preferably at least 60 mm², preferably at least 80 mm², preferably at least 100 mm²; and/or of at most 500 mm², preferably at most 460 mm², preferably at most 440 mm², preferably at most 420 mm², preferably at most 400 mm², preferably at most 100 mm².

The coil 10 described in the present disclosure may be used in a stellarator, for generating a magnetic field for confining a plasma inside a plasma vessel of the stellarator. The stellarator may comprise a coil support structure comprising a first structural arrangement arranged between a center of the stellarator and the plasma vessel and configured to balance a radial force exerted by the magnetic field on the plurality of coils. The stellarator may comprise a second structural arrangement also configured to balance forces, e.g., the same or difference forces exerted by the magnetic field on one or more coil segments of the plurality of coils. The toroidal direction of the stellarator may be indicted by way of TD (**Fig. 1**). It is understood that the toroidal direction TD also includes the direction opposite to the one indicated in this figure.

It is noted that the above examples may be combined with further aspects as described herein and details of the examples may also be omitted, as will be understood by the skilled person. The scope of protection is determined by the claims and is not limited by the embodiments disclosed in the above figures.

It is noted that for the purposes of this disclosure, the term *"essentially"* is to be understood such that typical manufacturing, design, and / or measurement tolerances should be taken into account.

It will be apparent to those skilled in the art that numerous modifications and variations of the described examples and embodiments are possible in light of the above teaching. The disclosed examples and embodiments are presented for purposes of illustration only. Other embodiments may include some or all of the features disclosed herein. Therefore, it is the intent to cover all such modifications and alternate embodiments as may come within the true scope of the inventions disclosed herein.

While this disclosure has described certain embodiments and generally associated methods devices and or systems, alterations and permutations of these embodiments and methods will be apparent to those skilled in the art. Accordingly, the above description of example embodiments does not define or constrain this disclosure. Other changes, substitutions, and alterations are also possible without departing from the scope of this disclosure, as defined by the independent and dependent claims.

### LIST OF REFERENCE NUMERALS

- 10: coil
- 11: centroid line
- 12: cable
- 12a: cable portion
- 13: helical winding path
- 15: stack
- 15a: tapes
- d1: first direction
- d2: second direction
- 20: winding layer
- 20a: winding layer
- 20b: winding layer
- 20c: winding layer
- 20d: winding layer
- 20e: winding layer
- 50: core
- AA: cross-section
- p: pitch
- TD: toroidal direction

## Claims

1. A non-planar, high-temperature superconducting coil, for generating a magnetic field for confining a plasma inside a plasma vessel, the coil comprising:
a high-temperature superconducting cable,
wherein the cable is wound in a plurality of turns along a centroid line of the coil and wherein the cable follows a helical winding path around the centroid line of the coil,
wherein the helical winding path comprises a plurality of loops per turn of the plurality of turns.

2. The coil of claim 1,
wherein the helical winding path comprises at least 5, preferably at least 6, preferably at least 8, preferably at least 10, preferably at least 12, preferably at least 15, preferably at least 20, preferably at least 25 loops per turn of the plurality of turns; and/or
wherein helical winding path comprises at most 100, preferably at most 80, preferably at most 70, preferably at most 60, preferably at most 50 loops per turn of the plurality of turns.

3. The coil of any one of the preceding claims 1 to 2,
wherein the cable forms at least one winding layer around the centroid line of the coil,
wherein the at least one winding layer comprises a plurality of cable portions of the cable, the plurality of cable portions preferably being arranged circumferentially around the centroid line of the coil.

4. The coil of any one of the preceding claims 1 to 3,
wherein the cable forms at least two winding layers around the centroid line of the coil, comprising a first and a second winding layer, each comprising a plurality of cable portions of the cable,
optionally, wherein the cable portions of the first winding layer are wound in a first direction around the main trajectory, wherein the cable portions of the second winding layer are wound in a second direction around the main trajectory,
wherein the first direction is the same as the second direction or wherein the first direction is different from the second direction.

5. The coil of claims 3 or 4,
wherein one or more of the one or more winding layers comprise at least 2, preferably at least 4, preferably at least 6, preferably at least 8, preferably at least 10, preferably at least 12, preferably at least 14 cable portions; and/or
wherein one or more of the one or more winding layers comprise at most 60, preferably at most 55, preferably at most 50, preferably at most 35, preferably at most 40 cable portions.

6. The coil of any one of the preceding claims 3 to 5,
wherein neighboring cable portions of one or more of the one or more winding layers belong to consecutive turns of the plurality of turns along the centroid line of the coil.

7. The coil of any one of the preceding claims 4 to 6,
wherein a winding layer at a radially outer side with respect to the centroid line comprises a greater number of cable portions compared to a winding layer at a radially inner side with respect to the outer side.

8. The coil of any one of the preceding claims 4 to 7,
wherein one or more of the plurality of cable portions of the cable of the first winding layer have the same number or a different number of loops per turn of the plurality of turns compared to one or more of the plurality of cable portions of the cable of the second winding layer.

9. The coil of any one of the preceding claims 4 to 8,
wherein the plurality of cable portions of the cable of the first winding layer is separated from and connected to the plurality of cable portions of the cable of the second winding layer via one or more joints.

10. The coil of any one of the preceding claims 4 to 9,
wherein a first cable portion of the plurality of cable portions of the cable of the first winding layer and a second cable portion of the plurality of cable portions of the cable of the second winding layer are arranged in radial alignment.

11. The coil of any one of the preceding claims 4 to 10,
wherein neighboring cable portions of a winding layer at a radially outer side with respect to the centroid line of the coil are spaced apart from one another by a greater amount compared to neighboring cable portions of a winding layer at a radially inner side with respect to the radially outer side.

12. The coil of any one of the preceding claims 1 to 11,
wherein the cable has a cross-section seen in a cross-section (A-A) of the coil essentially perpendicular to the centroid line of the coil of at least 10 mm², preferably at least 40 mm², preferably at least 60 mm², preferably at least 80 mm², preferably at least 100 mm²; and/or
of at most 500 mm², preferably at most 460 mm², preferably at most 440 mm², preferably at most 420 mm², preferably at most 400 mm², preferably at most 100 mm².

13. The coil of any one of the preceding claims 1 to 12,
wherein the cable constitutes one continuous cable for forming the coil.

14. The coil of any one of the preceding claims 1 to 13,
wherein the high-temperature superconducting cable comprises a high-temperature superconductor stack comprising a plurality of high-temperature superconducting tapes, preferably ReBCO tapes.

15. The coil of any one of the preceding claims 1 to 14,
wherein the cable comprises a helical pitch defining the length of one loop along the centroid line of the coil, wherein the helical pitch is at least 0.2, preferably at least 0.4, preferably at least 0.6, preferably at least 0.8, preferably at least 1.0, preferably at least 1.2, preferably at least 1.4; and/or
wherein the pitch is at most 2.5, preferably at most 2.4, preferably at most 2.3, preferably at most 2.2, preferably at most 2.1, preferably at most 2.0, preferably at most 1.9, preferably at most 1.8.
